Europäisches Patentamt

(19) European Patent Office

Office européen des brevets

(11) Numéro de publication : **0 091 382**
**B1**

(12) **FASCICULE DE BREVET EUROPÉEN**

(45) Date de publication du fascicule du brevet :
28.05.86

(51) Int. Cl.⁴ : **F 25 B 17/08, F 25 B 49/00**

(21) Numéro de dépôt : **83400701.5**

(22) Date de dépôt : **06.04.83**

(54) **Procédé et dispositif de réfrigération par adsorption.**

(30) Priorité : **06.04.82 FR 8205970**

(43) Date de publication de la demande :
**12.10.83 Bulletin 83/41**

(45) Mention de la délivrance du brevet :
**28.05.86 Bulletin 86/22**

(84) Etats contractants désignés :
**AT CH DE FR GB IT LI SE**

(56) Documents cités :
**CH-A- 128 557**
**DE-C- 457 681**
**DE-C- 611 445**
**DE-C- 678 098**
**DE-C- 692 634**
**FR-A- 691 876**
**FR-A- 969 451**
**US-A- 1 904 024**
**US-A- 2 461 262**

(73) Titulaire : **ETS BONNET**
**117, rue Grenette**
**F-69653 Villefranche sur Saone (FR)**

(72) Inventeur : **Rigot, Georges**
**THOMSON-CSF SCPI 19, av. de Messine**
**F-75008 Paris (FR)**

(74) Mandataire : **Phan, Chi Quy et al**
**THOMSON-CSF SCPI 19, avenue de Messine**
**F-75008 Paris (FR)**

## Description

La présente invention concerne un procédé et un dispositif de réfrigération par adsorption.

Plusieurs procédés et dispositifs de réfrigération par adsorption ont été déjà proposés. La plupart de ceux-ci utilisent l'énergie solaire comme source de chaleur. Dans ces procédés et dispositifs, pendant le jour, l'énergie solaire chauffe un adsorbant pour le libérer du fluide frigorigène préalablement adsorbé. Le fluide frigorigène gazeux ainsi chassé de l'adsorbant est recueilli et condensé sous forme de liquide. Pendant la nuit, l'adsorbant refroidi adsorbe du fluide frigorigène gazeux provenant d'une évaporation du fluide frigorigène liquide condensé pendant le jour. Cette évaporation du fluide frigorigène produit du froid. Dans un circuit fermé, ce cycle de fonctionnement peut recommencer avec l'apparition du soleil. Des valves pressostatiques ou à clapets anti-retour montées dans ce circuit permettent un fonctionnement automatique du dispositif. Un cycle de fonctionnement d'un tel dispositif dure ainsi une journée.

Pour obtenir dans une installation de réfrigération, deux cycles de fonctionnement pour une même journée, un procédé connu prévoit deux dispositifs de réfrigération ci-dessus, montés en série. Chacun de ces dispositifs comprend principalement : un bouilleur à adsorbant, un condenseur et un évaporateur. L'un de ces dispositifs est exposé à l'Est et l'autre à l'Ouest de manière à obtenir pour chacun d'eux et alternativement un ensoleillement pour un chauffage de l'adsorbant et une mise à l'ombre pour un refroidissement de ce dernier. Quand l'un libère le fluide frigorigène, l'autre l'adsorbe. Etant donné que l'installation de réfrigération comprend deux dispositifs montés en série, les éléments qui la composent, sont alors doublés par rapport à ceux constituant un seul dispositif. Autrement dit l'installation comprend d'une manière onéreuse deux bouilleurs remplis de l'adsorbant, deux condenseurs, et deux évaporateurs pour la condensation et l'évaporation du fluide frigorigène.

Pour augmenter le nombre de cycles de fonctionnement dans une installation, un autre procédé connu prévoit d'une part deux bouilleurs à adsorbant montés en parallèle dans un même circuit de réfrigération qui comprend un condenseur et un évaporateur pour fluide frigorigène et des valves pressostatiques à clapets anti-retour disposées de manière à obliger le fluide frigorigène qui sort d'un premier bouilleur, à traverser le circuit de réfrigération puis à entrer dans le deuxième bouilleur et d'autre part un système de miroirs permettant de diriger sélectivement les rayons solaires sur l'un ou l'autre de ces bouilleurs. Dans un premier bouilleur exposé au soleil, l'adsorbant chauffé libère du fluide frigorigène adsorbé tandis que dans le deuxième bouilleur laissé dans l'ombre l'adsorbant refroidi l'adsorbe. Le fluide frigorigène chassé ou libéré du premier bouilleur peut ainsi après une traversée du circuit, être adsorbé dans le deuxième bouilleur. Quand le cycle est terminé on peut mettre à l'ombre le premier bouilleur et exposer au soleil le deuxième bouilleur pour réaliser un autre cycle. En multipliant ainsi la permutation de ces deux bouilleurs à l'exposition au soleil et à la mise à l'ombre, par le système de miroirs on augmente le nombre de cycles de fonctionnement de l'installation.

Ces installations connues exigent ainsi pour leur fonctionnement pour des durées de cycles inférieures à une journée, plusieurs bouilleurs à adsorbant et dans certaines d'entre elles également plusieurs condenseurs et évaporateurs pour fluide frigorigène. En outre la puissance frigorifique de ces installations connues dépend de la constance de l'ensoleillement recueilli.

Un autre procédé connu prévoit une installation comprenant un bouilleur à adsorbant et un réservoir servant alternativement de condenseur et d'évaporateur pour un fluide frigorigène, le bouilleur et le réservoir étant en communication entre eux par une valve. Dans cette installation, le bouilleur à adsorbant chauffé par le soleil libère du fluide frigorigène adsorbé qui traverse la valve et se condense dans le réservoir. Ce dernier joue alors le rôle d'un condenseur. La valve est fermée dès la fin de la désorption de l'adsorbant du bouilleur. Pendant la nuit l'adsorbant refroidi peut adsorber de nouveau. Quand la valve est ouverte le fluide frigorigène aspiré par l'adsorbant passe du réservoir dans le bouilleur. L'évaporation du fluide dans le réservoir produit du froid. Le réservoir joue alors le rôle d'un évaporateur dans un circuit de réfrigération. Une telle installation présente de nombreux inconvénients. En dehors de sa dépendance de l'ensoleillement, cette installation exige des moyens particuliers et onéreux pour utiliser le froid produit. En effet dans cette installation le réservoir joue tantôt le rôle d'un condenseur tantôt celui d'un évaporateur. Quand le réservoir joue le rôle d'un évaporateur, le froid produit par l'évaporation du fluide frigorigène permet à l'espace qui entoure ce réservoir, de constituer un compartiment de congélation ou de conservation au frais des produits.

Quand le même réservoir joue le rôle d'un condenseur, son environnement est chauffé par la chaleur dégagée par la condensation du fluide frigorigène chassé du bouilleur et la température de l'espace qui contient ce réservoir, tend à s'élever fortement. A ce moment, les produits congelés ou conservés au frais dans cet espace, doivent être évacués.

Une installation de ce type à circuit frigorifique propre à une circulation alternée de fluide frigorigène est, selon une structure améliorée, décrit dans DE-A-692 634 sous forme d'une machine frigorifique dans laquelle le réservoir servant alternativement de condenseur et d'évaporateur pour fluide frigorigène est remplacé par un ensemble comportant un condenseur prolongé successivement et librement c'est-à-dire sans dispositif de séparation ou de réglage de débit, par un accumulateur et un évaporateur, l'évaporateur étant disposé dans l'enceinte d'une armoire frigorifique, l'accumulateur noyé dans l'épaisseur de la paroi isolante de cette armoire frigorifique et le condenseur monté à l'extérieur de cette dernière.

Les produits conservés dans cette armoire frigorifique ne sont pas obligés d'être évacués à chaque changement de cycle de fonctionnement de son circuit frigorifique comme ceux indiqués dans un paragraphe précédent.

Toutefois, quand la valve qui sépare le bouilleur du condenseur est ouverte dans une phase de désorption où l'adsorbant est réchauffé par une résistance chauffante, le fluide frigorigène gazeux libéré de l'adsorbant fait monter la pression dans le condenseur et par conséquent également dans l'accumulateur et l'évaporateur lesquels ne sont pas séparés de ce condenseur par aucun dispositif particulier. A un certain niveau, cette augmentation de pression de fluide frigorigène gêne et peut même arrêter l'évaporation du fluide frigorigène dans cet évaporateur et par conséquent la production de froid dans cette armoire frigorifique.

Dans un autre procédé décrit dans CH-A-128 557, une machine frigorifique à absorption comprend pour la circulation d'un fluide frigorigène, un circuit fermé comportant un absorbeur à résistance électrique chauffante et à système de refroidissement à eau, qui dans son état refroidi, retient ce fluide frigorigène, et dans son état réchauffé libère ce fluide, un condenseur refroidi par eau, qui transforme en liquide ce fluide frigorigène gazeux libéré par l'absorbeur et un évaporateur qui dans une production de froid transforme à l'état gazeux, du fluide frigorigène liquide venant de ce condenseur, et permet à ce fluide frigorigène dans cet état gazeux de retourner dans l'absorbeur pour recommencer un autre cycle. Dans ce circuit fermé aucun moyen n'est prévu pour isoler complètement ses éléments composants et séparer effectivement les phases d'absorption et de désorption du fluide frigorigène et par conséquent obtenir un bon rendement à la fois individuel pour chacun de ces éléments composants et global pour l'ensemble du circuit.

Dans US-A-1 904 024 est décrit un appareil réfrigérant à adsorption comportant un adsorbeur à adsorbant solide ou liquide et à résistance chauffante, un condenseur et un évaporateur formant un circuit fermé dans lequel le fluide réfrigérant gazeux venant de l'évaporateur à travers un clapet de non-retour et pénétrant dans l'adsorbeur est retenu par l'adsorbant refroidi et libéré de cet adsorbant au réchauffement de ce dernier.

Quand la pression du fluide réfrigérant gazeux libéré de l'adsorbant réchauffé dans l'adsorbeur est supérieure à la pression régnant dans le condenseur le fluide réfrigérant gazeux libéré peut traverser un clapet de non retour et entrer dans le condenseur où il est transformé en liquide. Le fluide réfrigérant liquide venant du condenseur, traverse un réservoir puis un détendeur pour entrer dans l'évaporateur, y être transformé à l'état gazeux et produire du froid avant de retourner dans l'adsorbeur pour recommencer un nouveau cycle.

Dans l'appareil réfrigérant décrit, les clapets de non-retour disposés à l'entrée et à la sortie de l'adsorbeur ne sont pas, par leur structure, aptes à isoler l'adsorbeur, de l'évaporateur et du condenseur et séparer effectivement les phases d'adsorption et de désorption du fluide frigorigène et par conséquent permettre d'obtenir un bon rendement individuel des éléments composants, et global de l'ensemble du circuit.

La présente invention permet d'éviter ces inconvénients dans la réalisation d'un dispositif de réfrigération par adsorption.

Selon l'invention, le procédé de réfrigération par adsorption utilisant dans un circuit frigorifique, fermé et à sens unique pour la circulation du fluide frigorigène, un adsorbant soumis, cycliquement et selon une fréquence choisie et réglable, à une désorption par chauffage et une adsorption par refroidissement par des moyens constamment disponibles et réglables en puissance, le fluide frigorigène libéré par désorption étant transformé en liquide dans un condenseur puis transformé en vapeur dans un évaporateur pour produire du froid avant d'être retourné sur l'adsorbant pour y être fixé de nouveau par l'adsorption, est caractérisé en ce que pour obtenir une puissance de réfrigération réglable, il comprend dans ce processus de fonctionnement à la fois un cloisonnement hermétique de l'adsorbant dans le circuit frigorifique pendant des intervalles de temps choisis de décalage imposés entre chacune de ses désorptions et ses adsorptions et une imposition au fluide frigorigène gazeux libéré de l'adsorbant, d'une transformation accélérée en liquide dans le condenseur par un moyen de refroidissement constamment disponible réglable en puissance et mis en marche durant chacune de ses désorptions et l'intervalle de temps choisi de décalage imposé entre cette désorption et l'adsorption subséquente, d'une transformation en vapeur dans l'évaporateur réalise par passage par un détendeur et accélérée par un échange thermique forcé avec l'air ambiant opéré par un moyen constamment disponible réglable en puissance et mis en marche durant chacune de ses adsorptions et l'intervalle de temps choisi de décalage imposé entre cette adsorption et la désorption qui la précède, d'un refroidissement de l'adsorbant par un moyen constamment disponible réglable en puissance et mis en marche durant chacune de ses adsorptions et l'intervalle de temps choisi de décalage imposé entre cette adsorption et la désorption qui la précède, et d'un chauffage réglable en puissance et mis en marche durant chacune de ses désorptions et l'intervalle de temps choisi de décalage imposé entre cette désorption et l'adsorption qui la précède.

L'invention se rapporte également à un dispositif pour la mise en œuvre de ce procédé.

Pour mieux faire comprendre l'invention, on en décrit ci-après un exemple de réalisation illustré par des dessins ci-annexés dont :

la figure 1 représente une vue schématique d'un circuit pour fluide frigorifique d'un dispositif de réfrigération par adsorption réalisé selon l'invention, et

la figure 2 représente des diagrammes d'alimentation électrique en fonction du temps t, des éléments de la figure 1, indiqués en ordonnées avec 1 pour une mise sous tension et 0 pour une mise hors tension.

Pour l'obtention d'une puissance de réfrigération réglable et promptement disponible dans un circuit fermé d'un dispositif de réfrigération par désorption et adsorption d'un fluide frigorigène par un adsorbant, appelé par abréviation dispositif de réfrigération par adsorption, le procédé comprend selon l'invention une imposition à cet adsorbant d'une fréquence choisie et réglable de désorption et d'adsorption par des moyens réglables en puissance et constamment disponibles assurant un chauffage et un refroidissement forcés de cet adsorbant. Ce procédé peut comprendre en outre un isolement entre la désorption et l'adsorption du fluide frigorigène par l'adsorbant et une imposition au fluide frigorigène libéré de l'adsorbant d'une condensation accélérée par un moyen de refroidissement réglable en puissance et constamment disponible, et d'une évaporation réalisée par passage par un détendeur, et accélérée par un échange thermique forcé avec l'air ambiant opéré par un moyen réglable en puissance et constamment disponible.

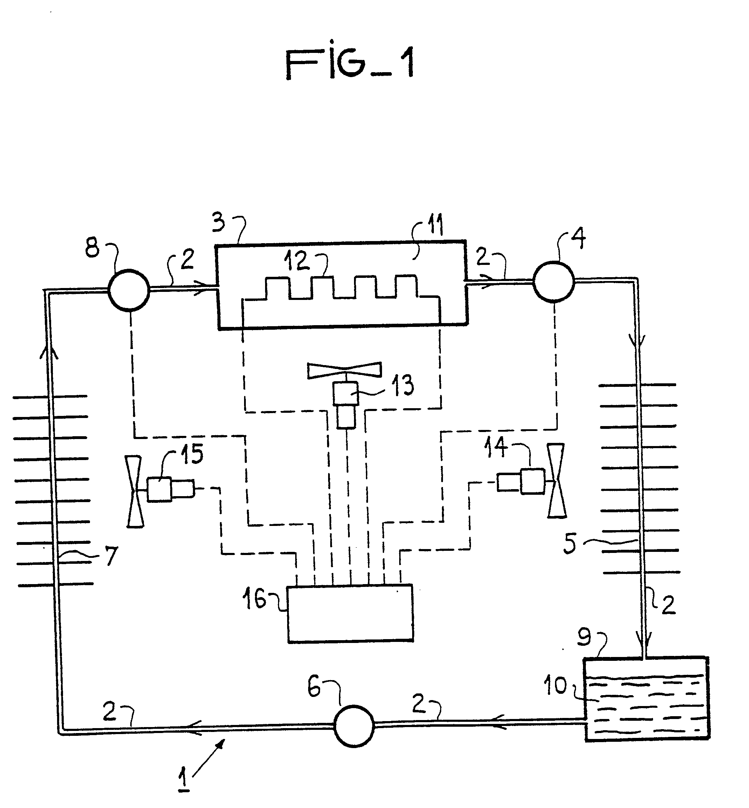

Le dispositif de réfrigération représenté schématiquement dans la figure 1, mettant en œuvre le procédé décrit dans les paragraphes précédents comprend les principaux éléments suivants, montés en série et reliés par des canalisations 2 pour former un circuit de réfrigération fermé : un bouilleur 3, une électrovanne de sortie du type tout ou rien 4, un condenseur 5, un détendeur 6, un évaporateur 7, une électrovanne d'entrée du type tout ou rien 8 et éventuellement un réservoir de stockage 9 pour du fluide frigorigène condensé liquide 10, monté entre le condenseur 5 et le détendeur 6.

Le bouilleur 3 contient un adsorbant de type connu 11 tel que du zéolite sous forme pulvérulente, de billes ou de briquettes. Dans le bouilleur 3, au sein de la masse de l'adsorbant 11 est monté un moyen de chauffage à puissance réglable et constamment disponible 12 constitué dans l'exemple illustré par un dispositif électrique chauffant par exemple une résistance électrique chauffante. A l'extérieur du bouilleur 3 est disposé un moyen de refroidissement à puissance réglable et constamment disponible 13 constitué dans l'exemple illustré par un ventilateur électrique qui dirige l'air frais sur ce bouilleur 3.

Au niveau du condenseur 5 est monté un moyen de refroidissement constamment disponible et à puissance réglable 14, du fluide frigorigène sortant du bouilleur 3, constitué dans l'exemple illustré par un ventilateur électrique qui envoie de l'air frais sur ce condenseur.

Le détendeur 6 permettant une évaporation efficace du fluide frigorigène 10 dans l'évaporateur 7 est constitué par un tube capillaire ou un autre dispositif connu assurant une fonction équivalente.

Un dispositif 15 à puissance réglable et constamment disponible assure un échange thermique forcé entre l'air ambiant et l'évaporateur 7, dans le but d'accélérer l'évaporation du fluide frigorigène, est constitué dans l'exemple illustré par un ventilateur électrique.

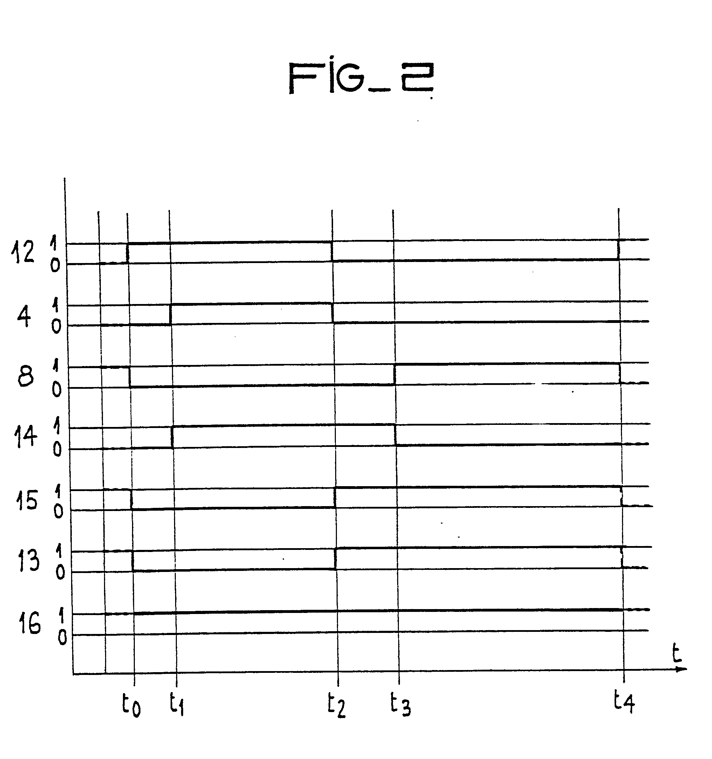

Un programmateur 16 d'un type connu choisi parmi les dispositifs électromécaniques ou électroniques tels que les microprocesseurs assure dans le fonctionnement du dispositif de réfrigération 1 une commande automatique en fonction du temps des éléments décrits ci-dessus suivant un programme sélectionné parmi des programmes préétablis. Le diagramme de la figure 2 illustre cette commande par une alimentation électrique de ces éléments aux temps indiqués pour un cycle de fonctionnement du dispositif 1.

Dans le circuit frigorifique du dispositif 1, au temps $t_0$ d'un début d'un cycle où l'adsorbant 11 du bouilleur 3 est chargé de fluide frigorigène, l'électrovanne de sortie 4 est fermée et le ventilateur 14 du condenseur 5 est au repos, le programmateur 16 met simultanément hors tension le ventilateur 15 associé à l'évaporateur 7, le ventilateur 13 du bouilleur 3 et l'électrovanne d'entrée 8, et sous tension la résistance chauffante 12 de l'adsorbant 11.

Les dispositifs de refroidissement du bouilleur 3 et du condenseur 5 et le dispositif assurant un échange thermique forcé de l'air ambiant avec l'évaporateur 7 sont ainsi mis au repos tandis que le bouilleur 3 avec l'adsorbant 11 chargé de fluide frigorigène est isolé du reste du circuit frigorifique par la fermeture des électrovannes 4 et 8 et soumis au chauffage pour réaliser une désorption de l'adsorbant 11. Les électrovannes 4 et 8 assurent ainsi par leur fermeture un isolement entre une désorption de l'adsorbant 11 dans le présent cycle de fonctionnement et une adsorption de cet adsorbant 11 dans le cycle précédent, et le programmateur 16 impose en même temps un décalage dans le temps entre cette désorption et cette adsorption de l'adsorbant 11.

L'adsorption et la désorption de l'adsorbant sont ainsi réalisées séparément avec leur pleine efficacité, ce que les valves pressostatiques dans les dispositifs connus n'ont pas pu faire.

Le moyen de chauffage à puissance réglable et constamment disponible constitué par la résistance électrique 12 permet par son réglage, de porter l'adsorbant 11 à la température de désorption, en temps souhaité.

Au temps $t_1$, l'adsorbant 11 étant élevé à sa température de désorption, le programmateur 16 met sous tension l'électrovanne de sortie 4 pour l'ouvrir, et le ventilateur 14 pour refroidir du fluide frigorigène gazeux qui, libéré du bouilleur 3 entre dans le condenseur 5. Grâce à ce refroidissement efficace, la condensation du fluide frigorigène gazeux libéré est rapide. Le fluide frigorigène condensé 10 est stocké sous forme de liquide dans le réservoir 9.

Au temps $t_2$, la désorption de l'adsorbant 11 étant terminée, le programmateur 16 met en même temps hors tension la résistance électrique chauffante 12 et l'électrovanne de sortie 4, et sous tension les ventilateurs 13 et 15.

Après libération du fluide frigorigène, l'adsorbant 11 est ainsi isolé du reste du circuit et soumis à un refroidissement. Le moyen de refroidissement à puissance réglable et constamment disponible, constitué par le ventilateur 13 permet par son réglage de refroidir le bouilleur 3 et par conséquent l'adsorbant 11, en un temps souhaité.

Au temps $t_3$, l'adsorbant 11 étant refroidi et prêt à adsorber, le programmateur 16 met simultanément d'une part sous tension l'électrovanne d'entrée 8 pour l'ouvrir et laisser le bouilleur 3 en communication avec l'évaporateur 7, et d'autre part hors tension le ventilateur 14 car la condensation du fluide frigorigène libéré de l'adsorbant 11 est terminée.

Le bouilleur 3, se trouvant sous une pression se rapprochant du vide, créée par un adsorbant vide de fluide frigorigène et refroidi, se comporte comme une pompe aspirante.

Le fluide frigorigène liquide appelé par l'adsorbant 11, traverse le détendeur 6 entre dans l'évaporateur 7 où son évaporation est accélérée par un échange thermique forcé opéré par le moyen de refroidissement à puissance réglable et constamment disponible constitué par le ventilateur 15. L'évaporation du fluide frigorigène liquide dans l'évaporateur produit du froid.

Dans le dispositif de réfrigération 1 réalisé selon l'invention, le condenseur 5 est distinct de l'évaporateur 7. L'espace entourant l'évaporateur 7 peut être utilisé d'une manière permanente, et avantageuse comme un compartiment de congélation ou de conservation au frais des produits.

Le fluide frigorigène évaporé est aspiré à travers l'électrovanne 8 dans le bouilleur 3 et y est fixé par l'adsorbant 11. Le ventileur 13 continue à refroidir cet adsorbant pour lui donner sa pleine capacité d'adsorption.

Au temps $t_4$, l'adsorbant 11 étant pleinement rechargé de fluide frigorigène, le programmateur 16 met hors tension l'électrovanne 8 pour la fermer, et coupe l'alimentation des ventilateurs 13 et 15 pour arrêter le refroidissement de l'adsorbant 11 et l'échange thermique forcé au niveau de l'évaporateur. En même temps le programmateur 16 met sous tension la résistance électrique chauffante 12 pour élever la température de l'adsorbant 11.

Le chauffage de l'adsorbant 11 chargé de fluide frigorigène et la fermeture de l'électrovanne 8 qui l'isole du reste du circuit permettent une nouvelle désorption de cet adsorbant. Un cycle de fonctionnement du dispositif 1 est ainsi terminé et un nouveau cycle peut commencer.

Pour une qualité donnée de l'adsorbant 11 et celle du fluide frigorigène utilisé, l'intervalle de temps $t_0$-$t_4$ peut être volontairement modifié en agissant sur la puissance de chauffage et/ou de refroidissement de l'adsorbant 11, et/ou la puissance de refroidissement du fluide frigorigène dans le condenseur et/ou celle de l'échange thermique forcé au niveau de l'évaporateur. En faisant varier le temps d'absorption et de désorption de l'adsorbant 11 autrement dit en imposant une fréquence choisie de désorption et d'adsorption à cet adsorbant on effectue le réglage de la puissance de réfrigération du dispositif 1.

Une adaptation de la production du froid par le dispositif de réfrigération 1 aux besoins demandés peut être ainsi facilement réalisée.

Le dispositif de réfrigération 1 décrit ci-dessus est commandé dans son fonctionnement par le programmateur 16 suivant une programmation séquentielle dont le paramètre principal est le temps.

**Revendications**

1. Procédé de réfrigération par adsorption utilisant dans un circuit frigorifique, fermé et à sens unique pour la circulation du fluide frigorigène, un adsorbant (11) soumis, cycliquement et selon une fréquence choisie et réglable, à une désorption par chauffage et une adsorption par refroidissement par des moyens constamment disponibles et réglables en puissance, le fluide frigorigène libéré par désorption étant transformé en liquide dans un condenseur puis transformé en vapeur dans un évaporateur pour produire du froid avant d'être retourné sur l'adsorbant pour y être fixé de nouveau par l'adsorption, caractérisé en ce que pour obtenir une puissance de réfrigération réglable, il comprend dans ce processus de fonctionnement à la fois un cloisonnement hermétique de l'adsorbant (11) dans le circuit frigorifique pendant des intervalles de temps choisis $(t_0$-$t_1$ ; $t_2$-$t_3)$ de décalage imposés entre chacune de ses désorptions et ses adsorptions, et une imposition au fluide frigorigène gazeux libéré de l'adsorbant (11), d'une transformation accélérée en liquide dans le condenseur (5) par un moyen de refroidissement constamment disponible réglable en puissance et mis en marche durant chacune de ses désorptions et l'intervalle de temps choisi $(t_2$-$t_3)$ de décalage imposé entre cette désorption et l'adsorption subséquente (14), d'une transformation en vapeur dans l'évaporateur (7) réalisée par passage par un détendeur (6) et accélérée par un échange thermique forcé avec l'air ambiant opéré par un moyen (15) constamment disponible réglable en puissance et mis en marche durant chacune de ses adsorptions et l'intervalle de temps choisi $(t_2$-$t_3)$ de décalage imposé entre cette adsorption et la désorption qui la précède, d'un refroidissement de l'adsorbant (11) par un moyen (13) constamment disponible réglable en puissance et mis en marche durant chacune de ses adsorptions et l'intervalle de temps choisi $(t_2$-$t_3)$ de décalage

imposé entre cette adsorption et la désorption qui la précède, et d'un chauffage réglable en puissance et mis en marche durant chacune de ses désorptions et l'intervalle de temps choisi $(t_0\text{-}t_1)$ de décalage imposé entre cette désorption et l'adsorption qui la précède.

2. Dispositif de réfrigération mettant en œuvre le procédé de la revendication 1, ayant un bouilleur à entrée et sortie (3), un condenseur (5) et un évaporateur (7) montés en série dans un circuit frigorifique fermé, caractérisé en ce qu'il comprend deux électrovannes du type tout ou rien (4, 8), l'une montée à la sortie et l'autre disposée à l'entrée du bouilleur (3) et un moyen de commande (16) de fermeture de ces électrovannes uniquement, pendant des intervalles de temps choisis $(t_0\text{-}t_1 ; t_2\text{-}t_3)$ de décalage imposés entre chacune de ses désorptions et ses adsorptions afin d'assurer un cloisonnement hermétique de l'adsorbant (11) dans ce circuit frigorifique fermé.

3. Dispositif selon la revendication 2, caractérisé en ce qu'il comprend comme moyens assurant le refroidissement de l'adsorbant et du fluide frigorigène et l'échange thermique forcé de ce dernier avec l'air ambiant, des ventilateurs électriques (13, 14, 15).

4. Dispositif selon l'une des revendications 2 et 3, ayant comme moyen de chauffage de l'adsorbant (11) une résistance électrique chauffante (12), caractérisé par un programmateur (16) commandant les électrovannes (4, 8), les ventilateurs électriques (13, 14, 15) et la résistance électrique chauffante (12) suivant une programmation séquentielle à paramètre constitué par le temps.

**Claims**

1. Method of refrigeration by adsorption, using in a closed refrigeration circuit having a single sense. of circulation of the refrigerant fluid, an adsorbent (11) which is cyclically submitted at a selected and adjustable frequency to a desorption by heating and to an adsorption by cooling through constantly available means of adjustable power, the refrigerant fluid released by the desorption being liquified in a condenser and then vaporized in an evaporator to produce cool prior to being returned to the adsorbent to be fixed thereon again by adsorption, characterized in that, in order to obtain an adjustable refrigeration power, it comprises within this process of operation simultaneously a hermetic separation of the adsorbent (11) within the refrigeration circuit during selected intervals of time $(t_0\text{-}t_1 ; t_2\text{-}t_3)$ of shiftings imposed between each of its desorptions and adsorptions, and an imposition of the gaseous refrigerant fluid released by the adsorbent (11) to an accelerated liquefaction within the condenser (5) by continuously available cooling means of adjustable power and activated during each of its desorptions and the selected time interval $(t_2\text{-}t_3)$ of shifting imposed between this desorption and the subsequent adsorption (14), to a vaporization within the evaporator (7) caused by passing through an expansion member (6) and accelerated by forced thermal exchange with the ambient air caused by continuously available means (15) of adjustable power which are activated during each of its adsorptions and the selected interval of time $(t_2\text{-}t_3)$ of shifting between this adsorption and the preceding desorption, to a refrigeration of the adsorbent (11) by continuously available means (13) of adjustable power which are activated during each of its adsorptions and the selected interval of time $(t_2\text{-}t_3)$ of shifting imposed between this adsorption and the preceding desorption, and to a heating with adjustable power which is activated during each of its desorptions and the selected interval of time $(t_0\text{-}t_1)$ of shifting imposed between this desorption and the preceding adsorption.

2. Refrigeration device wherein the method of claim 1 is applied, having a boiler with an input and an output (3), a condenser (5) and an evaporator (7) mounted in series within a closed refrigeration circuit, characterized in that it comprises two electrovalves of on/off type (4, 8) one of which is mounted at the outlet and the other at the inlet of the boiler (3), and means (16) for controlling the closing of these electrovalves only during selected intervals of time $(t_0\text{-}t_1 ; t_2\text{-}t_3)$ of shifting imposed between each of its desorptions and its adsorptions to ensure a hermetic separation of the adsorbent (11) within this closed refrigeration circuit.

3. Device according to claim 2, characterized in that it comprises electric fans (13, 14, 15) as a means for ensuring the cooling of the adsorbent and of the refrigerant fluid as well as the thermal force exchange of the latter with the ambient air.

4. Device according to any of claims 2 and 3, having an electric heating resistor (12) as a means for heating the adsorbent (11), characterized by programming means (16) controlling the electrovalves (4, 8), the electric fans (13, 14, 15) and the electric heating resistor (12) according to a sequential program wherein the time is a parameter.

**Patentansprüche**

1. Verfahren zum Kühlen mittels Adsorption unter Verwendung eines Adsorbens (11), das in einem geschlossenen Kühlkreislauf, in dem ein Kältemittel in einer einzigen Richtung zirkuliert, zyklisch und mit einer gewählten und einstellbaren Frequenz mittels Erwärmung einer Desorption und mittels Abkühlung einer Adsorption unterworfen wird, und zwar mit Hilfe einer ständig verfügbaren und in ihrer Leistung einstellbaren Einrichtung, wobei das durch die Desorption frei gemachte Kältemittel in einem Kondensator verflüssigt wird und anschließend zwecks Kälteerzeugung in einem Verdampfer verdampft wird, bevor das Kältemittel zum Adsorbens zurückgeleitet wird, um dort von neuem mittels Adsorption gebunden zu werden, dadurch gekennzeichnet, daß zur Erzielung einer steuerbaren Kühlleistung in diesem Betriebsprozeß sowohl das Adsorbens (11) im Kühlkreislauf während ausgewählter, jeweils zwischen den Desorptions- und Adsorptionszeiten liegender Verschiebungszeitintervalle ($t_0$-$t_1$ ; $t_2$-$t_3$) hermetisch eingeschlossen wird, als auch das aus dem Adsorbens (11) freigesetzte, gasförmige Kältemittel zum einen im Kondensator (5) beschleunigt verflüssigt wird mittels einer ständig verfügbaren und in ihrer Leistung steuerbaren Kühleinrichtung (14), die jeweils während seiner Desorbierzeiten und während des gewählten Verschiebungszeitintervalls ($t_2$-$t_3$) eingeschaltet wird, das sich zwischen diesem Desorbieren und dem folgenden Adsorbieren befindet, zum anderen im Verdampfer (7) verdampft wird, wobei es hierzu einen Druckminderer (6) durchströmt und diese Umwandlung durch einen zwangsweisen Wärmeaustausch mit der Umgebungsluft beschleunigt wird, wozu eine Einrichtung (15) betätigt wird, die dauernd verfügbar ist, die in ihrer Leistung steuerbar ist und die jeweils während seiner Adsorbierzeiten und der gewählten Verschiebungszeit ($t_2$-$t_3$) eingeschaltet wird, die zwischen dieser Adsorption und der vorhergehenden Desorption liegt, fernerhin mittels einer Einrichtung (13) gekühlt wird, die ständig verfügbar ist, deren Leistung steuerbar ist und die jeweils während seiner Adsorptionszeiten und dem Verschiebungszeitintervall ($t_2$-$t_3$) eingeschaltet wird, das sich zwischen dieser Adsorption und der vorhergehenden Desorption befindet, sowie einer in ihrer Leistung steuerbaren Heizung ausgesetzt wird, die jeweils während seiner Desorptionszeiten und dem gewählten Zeitverschiebungsintervall ($t_0$-$t_1$) eingeschaltet wird, das sich zwischen dieser Desorption und der vorhergehenden Adsorption befindet.

2. Vorrichtung zum Kühlen mit Hilfe des Verfahrens nach Patentanspruch 1 mit einem mit einem Einlaß und einem Auslaß versehenen Kocher (3), mit einem Verflüssiger (5) und mit einem Verdampfer (7), welche Bauelemente in einem geschlossenen Kühlkreislauf in Reihe geschaltet sind, dadurch gekennzeichnet, daß zwei ganz öffnende bzw. ganz schließende Elektromagnetventile (4, 8) vorgesehen sind, von denen das eine eingangsseitig und das andere ausgangsseitig des Kochers (3) angeordnet ist, und daß eine Steuerung (16) vorgesehen ist, die die Elektromagnetventile nur während ausgewählter Verschiebungszeitintervalle ($t_0$-$t_1$ ; $t_2$-$t_3$) schließt, die sich zwischen den jeweiligen Desorptionen und Adsorptionen befinden, um ein hermetisches Abriegeln des Absorbens (11) in dem geschlossenen Kühlkreislauf sicher zu stellen.

3. Vorrichtung nach Anspruch 2, dadurch gekennzeichnet, daß sie elektrische Gebläse (13, 14, 15) als Mittel, um das Adsorbens und das Kältemittel zu kühlen und einen zwangsweisen Wärmeaustausch des Kältemittels mit der Umgebungsluft zu bewirken, umfaßt.

4. Vorrichtung nach Anspruch 2 oder Anspruch 3, mit einem elektrischen Widerstands-Heizelement (12) als Mittel zur Heizung des Adsorbens (11), dadurch gekennzeichnet, daß ein Programmiergerät (16) die Elektromagnetventile (4, 8), die Gebläse (13, 14, 15) und das Heizelement (12) über eine Folgesteuerung steuert, deren Parameter die Zeit ist.

# FIG_1

# FIG_2